# EUROPEAN PATENT APPLICATION

(11) **EP 1 703 703 A1**
(43) Date of publication of application: **20.09.2006**
(21) Application number: 06004259.5
(22) Date of filing: 02.03.2006
(51) Int. Cl.: H04M 1/02, H01Q 1/24, H01Q 21/29

(54) **Antenna device for a pop-up type wireless portable terminal**

(30) Priority: 14.03.2005 KR 2005021004
(71) Applicant: Samsung Electronics Co., Ltd., Suwon-si, Gyeonggi-Do (KR)
(72) Inventor: Nam, Jang-Hyun No. 903-1001, Jugong APT, Suwon-si Gyeonggi-do (KR); Seol, Dong-Beom No. 301-1802,Dongsuwon LG vil.3cha, Suwon-si Geyeonggi-do (KR)
(74) Representative: Grünecker, Kinkeldey, Stockmair & Schwanhäusser Anwaltssozietät

(57) **Abstract**

An antenna device for a pop-up type wireless portable terminal is provided. The wireless portable terminal includes a main body. A pop-up body is provided to slide lengthwise on the main body so that the main body is partially opened or closed. A plate-type antenna radiator is provided at an appropriate position of an inner surface of the pop-up body. A whip antenna radiator is provided lengthwise across the main body and the pop-up body, for selectively contacting the main board of the main body and/or the plate-type antenna radiator along with opening and closing of the pop-up body.

## Description

### BACKGROUND OF THE INVENTION

### 1. Field of the Invention

The present invention relates generally to a wireless portable terminal having a pop-up body which is positioned at an upper portion of the terminal to serve as an earpiece and configured to be partially opened upward, and in particular, to an antenna device in a wireless portable terminal, for receiving multiple bands through coupling between a built-in antenna radiator and a whip antenna radiator extended lengthwise as a pop-up body is opened and closed.

### 2. Description of the Related Art

The development of electronic communications technology is a driving force behind the recent trend toward small size, lightness and diverse functions in wireless portable terminals. For example, a wireless portable terminal is provided with a speaker capable of outputting polyphonic melodies and a color display with tens of thousands to hundreds of thousands of pixels. Besides the basic call functionality, the wireless portable terminal functions as an MP3 player to play music and provides a variety of game content through the display. Continuing research efforts are being made to enhance these functions.

Wireless portable terminals with various functions implemented through a high-quality color display have been on the market. For example, an optical photographing device such as a small lens assembly can be provided in a wireless portable terminal, for use in video communications or for use as a digital camera or a camcorder.

Such a multi-function terminal is generally foldable. The foldable terminal in-eludes a main body and a sub-body that can be opened from the main body to a predetermined angle. In addition to the foldable terminal, a slider-type terminal has been put on the market. The slider-type terminal uses a sliding body that slides lengthwise a predetermined distance to an open state along a main body. Furthermore, to meet various users' demands, terminals have been developed to have various configurations in the sub-body opening mechanism. One of them is a terminal having a pop-up body that allows an earpiece part to slide upward to an open state.

In the pop-up type terminal, the pop-up body is configured to partially cover a display in the main body when it is closed and to fully expose the display when it is opened. Therefore, the pop-up body can be provided with a speaker device. Also, a predetermined antenna radiator is installed in the pop-up type terminal. The antenna radiator is a built-in antenna device attached or mounted to the inner surface of the pop-up body as a sub-body, electrically connected to a radio frequency (RF) board of the main body.

However, the built-in antenna device covers only a single band, shows a large performance change as the pop-up body is opened or closed, and is hard to apply to a Global System for Mobile communication (GSM) phone or other phones requiring multiple bands.

### SUMMARY OF THE INVENTION

An object of the present invention is to substantially solve at least the above problems and/or disadvantages and to provide at least the advantages below. Accordingly, an object of the present invention is to provide an antenna device for a pop-up type wireless portable terminal, which is configured to maintain a constant performance irrespective of the opening and closing of a pop-up body.

Another object of the present invention is to provide an antenna device for a pop-up type wireless portable terminal, which is configured to cover multiple bands as a pop-up body is opened and closed. A further object of the present invention is to provide an antenna device for a pop-up type wireless portable terminal, which is configured to allow antenna coupling in manufacturer-desired bands as a pop-up body is opened and closed. The above objects are achieved by providing an antenna device for a pop-up type wireless portable terminal.

According to the present invention, a wireless portable terminal includes a main body. A pop-up body is provided to slide lengthwise on the main body so that the main body is partially opened or closed. A plate-type antenna radiator is provided at an appropriate position of an inner surface of the pop-up body. A whip antenna radiator is provided lengthwise across the main body and the pop-up body, for selectively contacting the main board of the main body and/or the plate-type antenna radiator along with opening and closing of the pop-up body.

It is preferred that the two antenna radiators operate in conjunction with each other. As the pop-up body is opened and closed, the whip antenna radiator is coupled to the plate-type antenna radiator, to thereby achieve a desired bandwidth, for example, a broader bandwidth.

More preferably, the whip antenna radiator is applied in various ways depending on the structure of the wireless portable terminal. For example, one end of the whip antenna radiator is fixed to the plate-type antenna radiator and the other end thereof is electrically connected to an RF connector of the main body. If this configuration is not available, it can be further contemplated that one end of the whip antenna radiator is fixed to the main body and the other end thereof is selectively brought into contact with the plate-type antenna radiator. Consequently, the antenna device offers desirable sufficient bandwidth suitable for the usage of the terminal.

### BRIEF DESCRIPTION OF THE DRAWINGS

The above and other objects, features and advantages of the present invention will become more apparent from the following detailed description when taken in conjunction with the accompanying drawings in which:
FIG. 1 is a front perspective view of a typical pop-up type wireless portable terminal;
FIG. 2 is a perspective view of the pop-up body illustrated in FIG. 1 in an open state;
FIG. 3 is a rear perspective view of the wireless portable terminal with a marked area in which a built-in antenna device of the present invention is installed;
FIG. 4 is a schematic perspective view of a built-in antenna device installed within the pop-up body according to the embodiment of the present invention;
FIGs. 5A and 5B are operational views illustrating the operation of the built-in antenna device of FIG. 4 as the pop-up body is opened and closed;
FIGs. 6A and 6B are operational views illustrating the operation of a built-in antenna device as the pop-up body is opened and closed according to an alternative embodiment of the present invention; and
FIGs. 7A and 7B are graphs illustrating the standing wave ratio (SWR) of the built-in antenna device illustrated in FIGs. 6A and 6B when the pop-up body is opened and closed.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

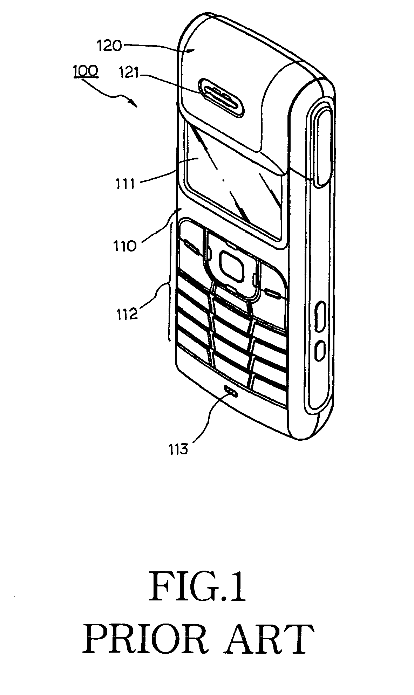

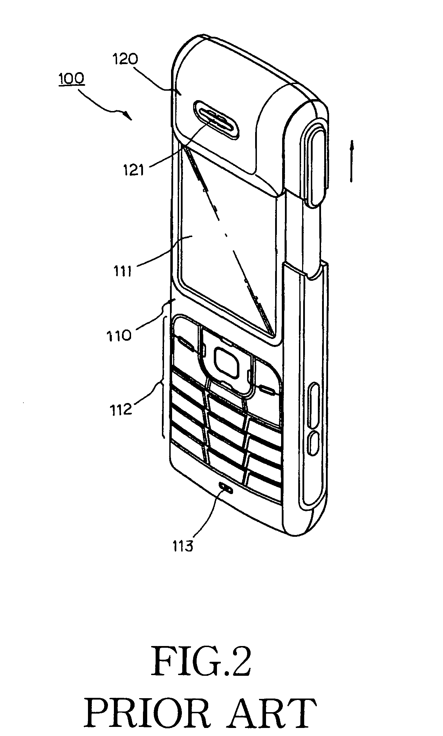

FIG. 1 is a front perspective view of a typical pop-up type wireless portable terminal and FIG. 2 is a perspective view of the pop-up body illustrated in FIG. 1 in an open state. A pop-up type terminal 100 includes a main body 110 and a pop-up body 120 for sliding up lengthwise from an upper portion of the main body 110.

The main body 110 is provided with a keypad assembly 112 thereon. The keypad assembly 112 may include a 3x4 key array and navigation keys. Under the keypad assembly 112 is disposed a microphone 113. A display 111 is provided over the keypad assembly 112. The display 111 is installed on the frontal surface of the main body such that it is partially covered when the pop-up body 120 is closed.

A speaker 121 is disposed on the pop-up body 120. While not shown, the speaker 121 can be so configured as to be electrically connected to the main body 110 even if the pop-up body 120 slides up to a predetermined distance along the length direction of the terminal 100 as indicated by an arrow in FIG. 2.

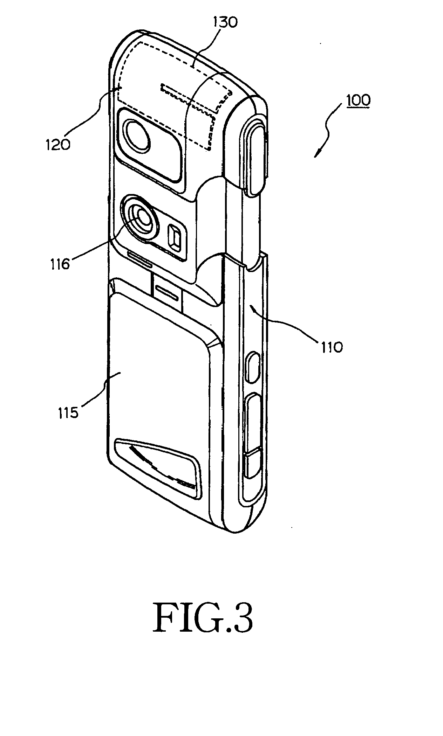

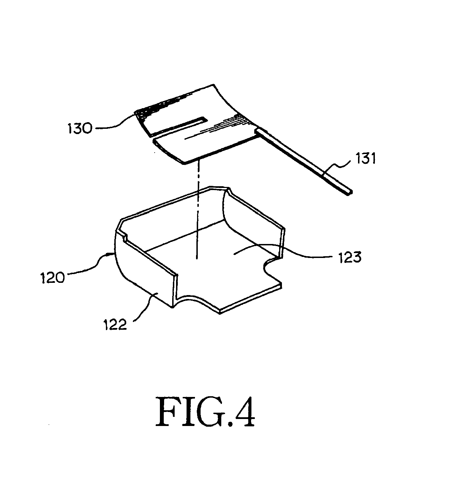

FIG. 3 is a rear perspective view of the wireless portable terminal with a marked area in which a built-in antenna device of the present invention is installed, and FIG. 4 is a schematic perspective view of a built-in antenna device installed within the pop-up body according to an embodiment of the present invention. The main body 110 is provided, on the rear surface thereof, with a detachable battery pack 115 as a power supply, and a lens assembly 116 for capturing images of objects. The lens assembly 116 may have a charge coupled device (CCD) with tens to millions of pixels.

Referring to FIGs. 3 and 4, an antenna radiator 130 is provided on the inner surface 123 of a lower frame 122 of the pop-up body 120. The antenna radiator 130 is a plate shaped into a predetermined pattern. The pattern may vary depending on the size, shape and functions of the terminal. The antenna radiator 130 can be a typical metal plate, to which the present invention is not limited. For example, the antenna radiator 130 can be a flexible printed circuit (FPC) with a micro-strip line formed therein, a printed circuit board (PCB) with a predetermined pattern formed thereon, or conductive spray coated on the inner surface 123 of the pop-up body 120.

The plate-type antenna radiator 130 is provided with a whip antenna radiator 131 extended a predetermined length toward the main body 110. While a known whip antenna can be used as the whip antenna radiator 131, to which the present invention is not limited, a metal shaft with one end electrically connected and mechanically fixed to the plate-type antenna radiator 130 or a PCB dielectric of a predetermined thickness with a predetermined conductive pattern therein is also available as the whip antenna radiator 131. Furthermore, the whip antenna radiator 131 may have a retractable antenna configuration (not shown) in which hollow shafts having different diameters advance and recede as the pop-up body 120 is opened and closed.

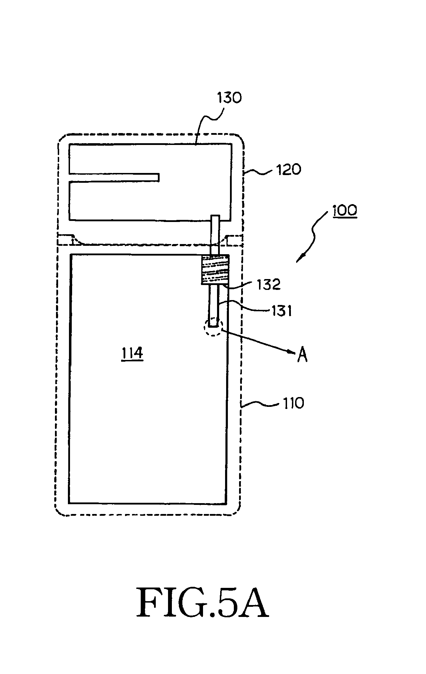

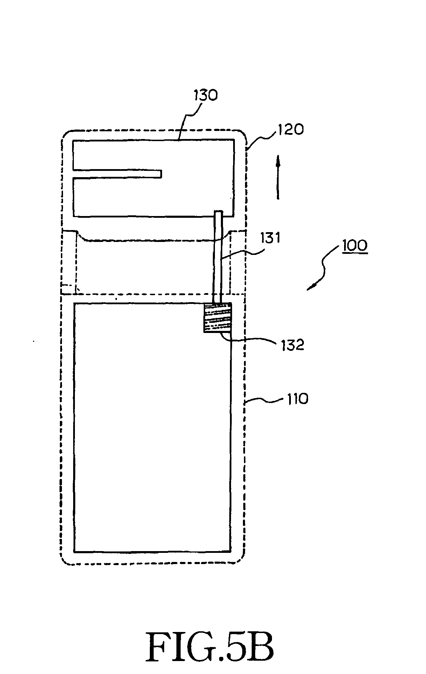

FIGs. 5A and 5B are views illustrating the operation of the built-in antenna device along with the opening and closing of the pop-up body according to the embodiment of the present invention.

Referring to FIG. 5A, in the state where the pop-up body 120 is closed on the main body 110, the whip antenna radiator 131 is extended through a predetermined helical antenna 132 provided on a main board 114 of the main body 110. The helical antenna 132 is fixed to the main body 110 or the main board 114, and electrically connected to an RF connector (not shown) of the main board 114. Therefore, referring to FIG. 5B, as the pop-up body 120 is completely opened from the main body 110, an end of the whip antenna radiator 131 (i.e. a part A in FIG. 5A) is brought into an electrical contact with the helical antenna 132, thereby rendering the antenna device to act as a dipole antenna.

While not shown, the antenna device may have a monopole antenna configuration by substituting a predetermined metal bushing for the helical antenna 132 and selectively bringing the metal bushing and the whip antenna radiator 131 into contact as the pop-up body 120 is opened and closed. In this arrangement the metal bushing is connected electrically to the RF connector of the main board 114.

Meanwhile, in the case where the metal means installed on the main body 110 or the main board 114 is the helical antenna 132, the plate-type antenna radiator 130 may be configured as a retractable antenna that is electrically connected to the main board 110 only when the pop-up body 120 is opened. On the other hand, in the case of a metal bushing, the plate-type antenna radiator 130 can be electrically connected to the RF connector of the main board 114 by means of an additional connector (e.g. an FPC). Yet, the present invention is not limited to these configurations and can be implemented in various ways depending on the antenna operation characteristics of the terminal used.

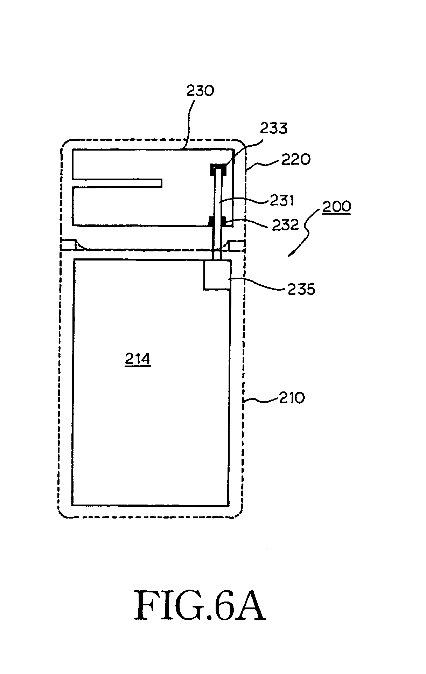

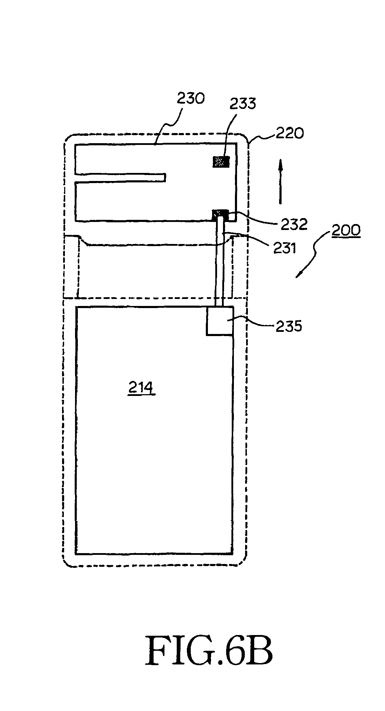

FIGs. 6A and 6B are operational views illustrating the operation of a built-in antenna device along with the opening and closing of the pop-up body according to an alternative embodiment of the present invention.

Compared to the antenna configuration illustrated in FIGs. 5A and 5B in which the plate-type antenna radiator 130 and the whip antenna radiator 131 move together along with the opening and closing of the pop-up body 120, an antenna device illustrated in FIGs. 6A and 6B is so configured that only a plate-type antenna radiator 230 moves along with the opening and closing of a pop-up body 220. Therefore, an end of a whip antenna radiator 231 is fixed to a predetermined fixture 235 on the main board 214 of the main body 210. The other end of the whip antenna radiator 231 is brought into an electrical contact with appropriate upper and lower portions 232 and 233 of the plate-type antenna radiator 230, as the pop-up body 220 is opened and closed. Thus, predetermined contact points may be formed, apart from each other by a predetermined distance, on the plate-type antenna radiator 230.

While not shown, the other end of the whip antenna radiator 231 may be formed into a known plate-type spring and this spring can be electrically fixed. Hence, an extended portion of the plate-type spring is selectively brought into an electrical contact with the two contact points 232 and 233 of the plate-type antenna radiator 230. The other part of the plate-type antenna radiator 230 than the two contact points 232 and 233 can be coated with a non-conductive material, to which the present invention is not limited. Any other known connection means is available. Furthermore, the fixture 235 can be a metal bushing or a helical antenna depending on the shape of the antenna device, as described above.

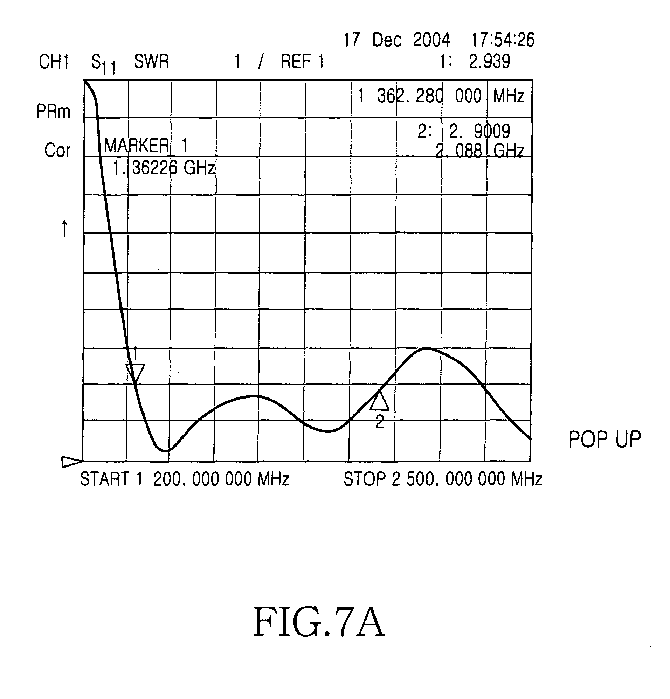

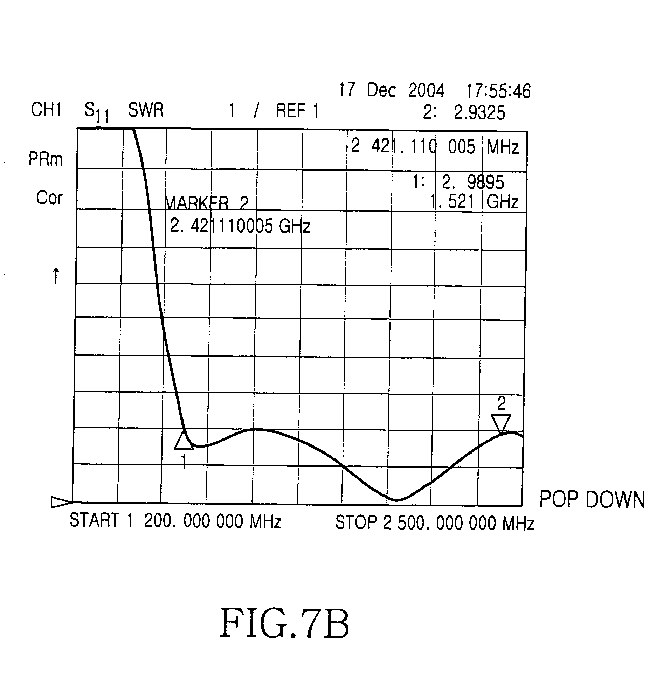

FIGs. 7A and 7B are graphs illustrating the SWR of the antenna device when the pop-up body is opened and closed according to the alternative embodiment of the present invention. Referring to FIGs. 7A and 7B, a broadband antenna device can be realized which covers a 700-MHz bandwidth when the pop-up body is opened and a 900-MHz bandwidth when the pop-up body is closed. These bandwidths result from an exemplary embodiment. Accordingly, an antenna device with a desired bandwidth can be implemented by modifying the pattern of the plate-type antenna radiator or the whip antenna radiator, or changing the contact points where the plate-type antenna radiator contact the whip antenna radiator during the opening and closing of the pop-up body within the scope and spirit of the present invention.

As described above, the antenna device of the present invention is implemented as a built-in antenna device and in addition, it operates as an extendable antenna mechanism with excellent performance. Therefore, the antenna device enables a terminal to have an excellent performance in multiple bands including a GSM band.

While the invention has been shown and described with reference to certain preferred embodiments thereof, it will be understood by those skilled in the art that various changes in form and details may be made therein without departing from the scope of the invention as defined by the appended claims.

## Claims

1. A wireless portable terminal (100,200) comprising:
a main body (110,210);
a pop-up body (120,220) for sliding on the main body so that the main body is partially opened or closed;
a plate-type antenna radiator (130,230) provided at an inner surface of the pop-up body, and
a whip antenna radiator (131,231) provided across the main body and the pop-up body,
**characterized in that**
said whip antenna radiator (131,231) is adapted to selectively contact a main board (114,214) of the main body and/or the plate-type antenna radiator (130,230) during opening and closing of the pop-up body to change the bandwidth of the antenna.

2. The wireless portable terminal of claim 1, wherein an end of the whip antenna radiator (131) is fixed to and electrically connected to the plate-type antenna radiator (130).

3. The wireless portable terminal of claim 2, further comprising a metal bushing (132) fixed on one of the main body (110) and the main board (114) and electrically connected to a radio frequency (RF) connector of the main board, allowing the whip antenna radiator (131) to extend therethrough and thus guiding the whip antenna radiator during opening and closing of the pop-up body (120).

4. The wireless portable terminal of claim 3, wherein the plate-type antenna radiator (130) is one of a metal plate patterned into a predetermined shape, a conductive spray coated on the inner surface of the pop-up body, and a flexible printed circuit (FPC) having a micro-strip line formed into a predetermined shape.

5. The wireless portable terminal of claim 3, wherein an other end of the whip antenna radiator (131) is electrically connected to the metal bushing (132) when the pop-up body (120) is completely opened.

6. The wireless portable terminal of claim 2, further comprising a helical antenna radiator (132) provided on one of the main body (110) and the main board (114) and electrically connected to a radio frequency (RF) connector of the main board, allowing the whip antenna radiator to extend therethrough and thus guiding the whip antenna radiator (131) during opening and closing of the pop-up body.

7. The wireless portable terminal of claim 6, wherein an other end of the whip antenna radiator (131) is electrically connected to the helical antenna radiator (132) when the pop-up body is completely opened.

8. The wireless portable terminal of claim 7, wherein the whip antenna radiator (131) is one of a metal shaft of a predetermined length, a flexible printed circuit (FPC) having a conductive pattern therein, and a printed circuit board (PCB) dielectric of a predetermined thickness with a conductive pattern thereon.

9. The wireless portable terminal of claim 1, wherein an end of the whip antenna radiator (231) is fixed to a conductive fixture (235) electrically connected to a radio frequency (RF) connector of the main board (214), and an other end of the whip antenna radiator is guided to be selectively brought into an electrical contact with upper and lower portions (233,232) of the plate-type antenna radiator (230) during opening and closing of the pop-up body (220).

10. The wireless portable terminal of claim 9, wherein the conductive fixture (235) is a metal bushing.

11. The wireless portable terminal of claim 9, wherein the conductive fixture (235) is a helical antenna.

12. The wireless portable terminal of claim 1, wherein the plate-type antenna radiator (230) is one of a metal plate patterned into a predetermined shape, a conductive spray coated on the inner surface of the pop-up body, and a flexible printed circuit (FPC) having a micro-strip line formed into a predetermined shape.

13. The wireless portable terminal of claim 1, wherein the whip antenna radiator (231) is one of a metal shaft of a predetermined length, a flexible printed circuit (FPC) having a conductive pattern therein, and a printed circuit board (PCB) dielectric of a predetermined thickness with a conductive pattern thereon.
